# FASCICULE DE BREVET EUROPEEN

(11) **EP 1 250 988 B1**
(45) Date de publication et mention de la délivrance du brevet: **28.09.2005**
(21) Numéro de dépôt: 02007867.1
(22) Date de dépôt: 09.04.2002
(51) Int. Cl.: B26D 7/20

(54) **Dispositif pour le montage et le démontage des revêtements d'un contre-cylindre de découpe rotative**
Vorrichtung zur Montage und Demontage der Tücher einer Gegenwalze in einer Rotationsstanzmaschine
Apparatus for assembling and disassembling the blankets of a counter cylinder in a rotary cutting press

(30) Priorité: 18.04.2001 FR 0105222
(43) Date de publication de la demande: 23.10.2002
(73) Titulaire: Martin, 69628 Villeurbanne (FR)
(72) Inventeur: Capdeboscq, Bernard, 38540 Saint Just-Chaleyssin (FR)
(74) Mandataire: Colomb, Claude

(56) Documents cités:
- GB-A- 1 110 078
- GB-A- 1 284 695
- US-A- 3 110 255
- US-A- 3 739 675
- US-A- 3 882 750
- US-A- 4 157 067
- US-A- 4 378 737

## Description

La présente invention se rapporte à un dispositif pour le montage et le démontage des revêtements d'un contre-cylindre de découpe rotative, selon le préambule de la revendication 1. Un tel dispositif est décrit par le brevet US 3,739,675 A, considéré comme l'état de la technique le plus proche. Le découpage rotatif du carton ou du carton ondulé est une opération bien connue de la pratique qui fait intervenir entre autres, d'une part un cylindre porte-outils composé en général d'un corps de cylindre métallique sur lequel sont fixées des coquilles, de préférence réalisées en bois, dans lesquelles sont insérés des filets métalliques de découpage et d'autre part un contre-cylindre de découpe communément appelé enclume. Ce contre-cylindre est constitué d'un corps de cylindre métallique sur lequel sont rapportées des bandes de revêtement en général faites dune matière plastique telle que du polyuréthane par exemple.

Il est à remarquer que le cylindre porte-outils peut être habillé de différentes coquilles ayant des configurations de filets de découpage dictées en fonction des formes et des dimensions des boîtes qui doivent être découpées. La matière à découper, dans le cas présent, du carton ondulé passe entre le cylindre porte-outils et le contre-cylindre de découpe et, lors de l'opération de découpage, les filets métalliques du cylindre porte-outils pénètrent plus ou moins profondément dans les bandes de revêtement, ce qui provoque après un certain nombre d'heures de découpage une usure de certaines de ces bandes de revêtement.

Ces bandes de revêtement sont généralement montées côte à côte sur la largeur du corps de cylindre du contre-cylindre. Le corps de cylindre présente une rainure s'étendant sur toute sa largeur. La fixation des bandes de revêtement est réalisée en encastrant au maillet les extrémités de ces bandes de revêtement dans la rainure aménagée dans le contre-cylindre. Chaque extrémité des bandes de revêtement peut être renforcée par une armature métallique et présente, pour l'une, un nez de centrage et pour l'autre une encoche dans laquelle s'engage le nez de centrage. En raison de cette fixation, le montage ainsi réalisé est pratiquement permanent et nécessite un démontage en force.

La détérioration de la surface des bandes de revêtement n'est pas régulière sur toute la largeur du contre-cylindre et il est bien évident que lorsque cette détérioration perturbe l'opération de découpage ou de rainurage du carton il convient de rétablir un état de surface acceptable du revêtement du contre-cylindre.

En général le rétablissement de cet état de surface est effectué en rectifiant le diamètre extérieur du revêtement du contre-cylindre par meulage ou tout autre usinage similaire. En raison de la cadence de production élevée des machines de découpe rotative, cette opération doit se répéter fréquemment et, en plus de provoquer une diminution appréciable de la productivité de la machine, elle entraîne une consommation importante de bandes de revêtement.

La présente invention a pour but de supprimer les inconvénients précités en procurant à ses utilisateurs un contre-cylindre dont la conception permette d'espacer au maximum les opérations de rectification, voir même de les supprimer.

A cet effet, la présente invention a pour objet un dispositif pour le montage et le démontage des bandes de revêtement d'un contre-cylindre de découpe rotative comportant des moyens pour serrer et desserrer les extrémités d'au moins une bande de revêtement de façon à autoriser sa permutation dans la largeur du contre-cylindre dé découpe rotative, ayant les caractéristiques de la revendication 1. Des modes préférés de réalisation sont contenus dans les revendications dépendantes.

Les dessins annexés illustrent, schématiquement et à titre d'exemple, un mode de réalisation du dispositif pour le montage et le démontage des bandes de revêtement d'un contre-cylindre de découpe rotative objet de la présente invention.
La figure 1 est une vue schématique d'un contre-cylindre de découpe rotative,
La figure 2 est une vue en plan d'un coulisseau déplaçable,
La figure 3 est une vue en coupe partielle selon III-III de la figure 1 représentant un dispositif de blocage et de déblocage à une seule mâchoire en position de serrage des bandes de revêtement,
La figure 4 est une vue en coupe partielle selon III-III de la figure 1 représentant un dispositif de blocage et de déblocage à deux mâchoires en position de serrage des bandes de revêtement,
La figure 5 est une vue en coupe partielle selon III-III de la figure 1 représentant le dispositif de blocage et de déblocage à deux mâchoires en position de desserrage des bandes de revêtement,
La figure 6 est une vue en perspective d'un dispositif de traction,
La figure 7 est une vue selon A de la figure 5, et
Les figures 8a à 8d représentent schématiquement les séquences de permutation des bandes de revêtement.

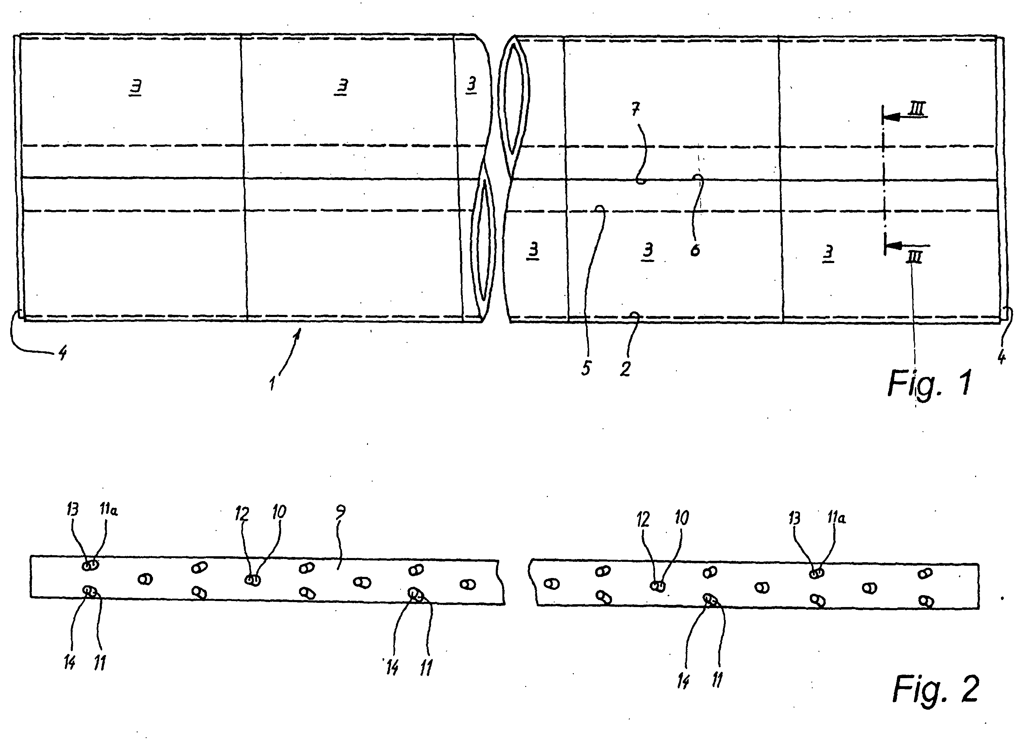

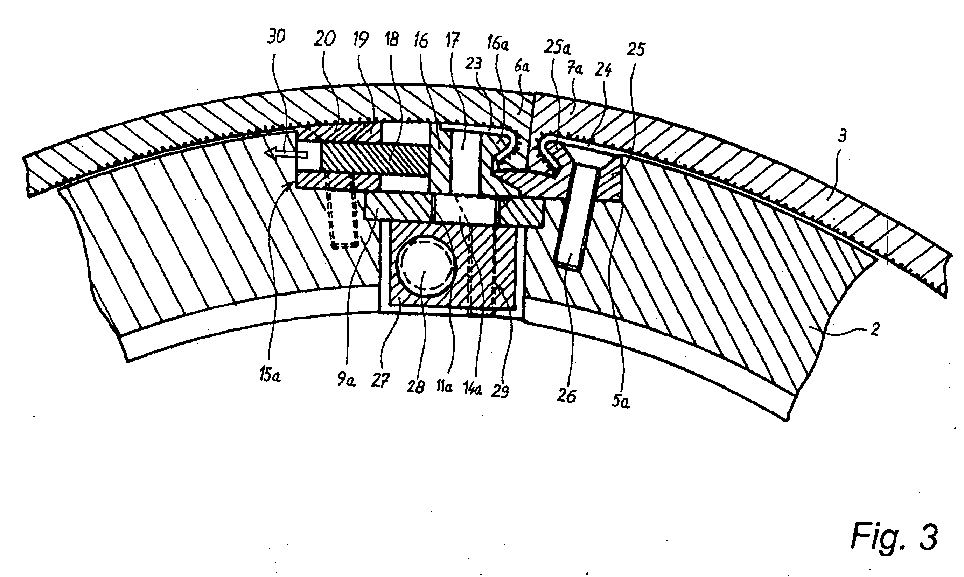

La figure 1 est une vue schématique d'un contre-cylindre de découpe rotative 1 comprenant un corps de cylindre 2 sur lequel sont enroulées des bandes de revêtement 3 retenues à chacune des extrémités du corps de cylindre 2 au moyen de disques d'arrêt 4. Le corps de cylindre 2 comporte une rainure 5 s'étendant sur toute sa largeur. Les extrémités 6, 7 des bandes de revêtement 3 s'engagent dans un moyen de serrage et de desserrage constitué par un dispositif de blocage et de déblocage 8 (voir figures 3, 4 et 5) agencé dans la rainure 5.

La figure 2 est une vue en plan d'un coulisseau déplaçable 9 utilisé dans le dispositif de blocage et de déblocage 8. Ce coulisseau déplaçable 9 comporte des rainures de guidage 10 et des rainures en forme de cames linéaires 11 dans lesquelles s'engagent des galets 12, 13 et 14 (voir figures 3 à 6).

La figure 3 est une vue en coupe partielle selon III-III de la figure 1 représentant un dispositif de blocage et de déblocage 15a, à une seule mâchoire 16, en position de serrage des bandes de revêtement 3. Le dispositif de blocage et de déblocage 15a comprend un coulisseau déplaçable 9a qui comporte des rainures en forme de cames linéaires 11a dans lesquelles s'engagent les galets 14a. Les galets 14a sont montés sur un axe 17 solidaire de la mâchoire 16. Cette mâchoire 16 est munie de tiges de guidage 18 pouvant coulisser dans une barrette 19 fixée dans la rainure 5a au moyen des vis 20. L'extrémité 6a de la bande de revêtement 3 s'accroche sur le nez 16a de la mâchoire 16. L'autre extrémité 7a de la bande de revêtement 3 est accrochée quant à elle sur le nez 25a d'une barrette fixe 25 maintenue dans la rainure 5a à l'aide des vis 26. Les extrémités des bandes peuvent suivant fabrication être renforcées aux extrémités par des raidisseurs 23 et 24. Le coulisseau déplaçable 9a comporte, à l'une de ses extrémités un dispositif de traction constitué par un écrou 27 traversé par une vis de déplacement 28. Cet écrou 27 est fixé à la partie inférieure du coulisseau déplaçable 9a à l'aide des vis 29.

Ainsi, lors de l'actionnement, dans un sens, de la vis de déplacement 28 du coulisseau déplaçable 9a, la mâchoire 16 va se déplacer en direction de la flèche 30 pour effectuer le desserrage de l'extrémité 6a de la bande de revêtement 3. Ce déplacement de la mâchoire 16 est obtenu par le truchement de l'action des rainures 11a en forme de cames linéaires, aménagées dans le coulisseau déplaçable 9a, sur les galets 14a, solidaires de la mâchoire 16. Le déplacement de la mâchoire 16 sera choisi de façon à ce que l'extrémité 6a de la bande de revêtement 3 puisse être dégagée du nez 16a de sorte que le démontage de cette bande de revêtement s'effectue facilement et sans détérioration. En tournant la vis de déplacement 28 dans le sens inverse, après avoir replacé soit une bande de revêtement 3 devant être permutée, soit une nouvelle bande de revêtement 3, la mâchoire se déplacera dans le sens inverse de la flèche 30 ce qui engendrera le serrage de l'extrémité 6a de la bande de revêtement 3 contre son extrémité 7a.

Il est à noter que dans cette version, le coulisseau déplaçable 9a présente des rainures en forme de cames linéaires 11a sur une seule partie de sa surface, en raison du fait de l'existence d'une seule mâchoire 16. Il peut exister un nombre de dispositifs de blocage et de déblocage 15a quelconque dans la largeur, indépendant du nombre de bandes de revêtement 3 réparties sur la largeur du corps de cylindre 2.

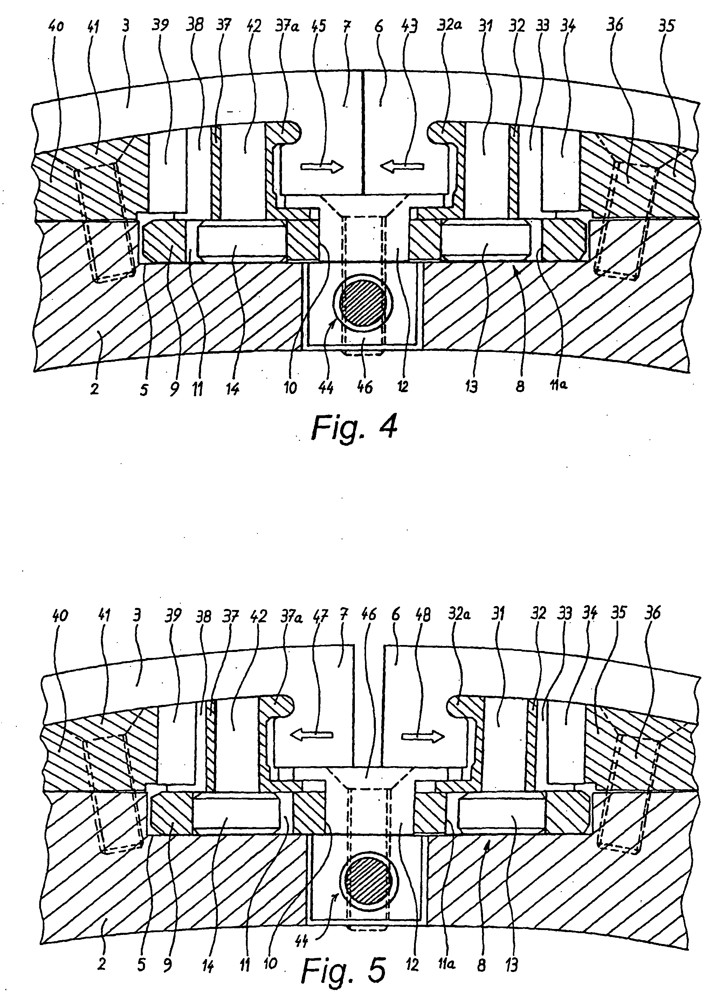

La figure 4 est une vue en coupe partielle selon III-III dé la figure 1 représentant un dispositif de blocage et de déblocage 8 à deux mâchoires en position de serrage des bandes de revêtement 3. Le dispositif de blocage et de déblocage 8 comprend un coulisseau déplaçable 9 qui comporte des rainures en forme de cames linéaires 11a dans lesquelles s'engagent des galets 13 et 14 (voir aussi figure 2). Les galets 13 sont montés sur un axe 31 chassé dans la mâchoire 32. Cette mâchoire 32 comporte un profil en forme de denture 33 agissant conjointement avec un profil 34 conjugué agencé dans la barrette fixe 35 fixée dans la rainure 5 du corps de cylindre 2 au moyen des vis 36. La fonction remplie par ces profils 33, 34 consiste à toujours supporter la bande de revêtement 3 dans le cas où un filet coupeur se trouverait en regard de la partie de circonférence correspondant à la zone située entre l'arrière de la mâchoire 32 et l'avant de la barrette fixe 35. Il est évident que si l'on choisissait une partie arrière rectiligne de la mâchoire 32 et une partie avant rectiligne de la barrette fixe 35, il se créerait au serrage une fente au droit de laquelle la bande de revêtement 3 ne serait pas supportée. L'extrémité 6 de la bande de revêtement 3 peut être renforcée par un raidisseur (non représenté) et s'accroche sur le nez 32a de la mâchoire 32. L'autre extrémité 7 de la bande de revêtement 3, pouvant être aussi renforcée par un raidisseur (non représenté), est accrochée quant à elle sur le nez 37a d'une seconde mâchoire 37. La mâchoire 37 comporte, elle aussi, un profil en forme de denture 38 agissant conjointement avec un profil en forme de denture 39 conjugué agencé dans la barrette fixe 40 fixée dans la rainure 5 du corps de cylindre 2 au moyen des vis 41. Les dentures 38 et 39 remplissent la même fonction que les dentures 33 et 34 mentionnées précédemment. Les galets 14, associés à la mâchoire 37, s'engagent dans les rainures en forme de cames linéaires 11 et sont montés sur un axe 42 fixé dans la mâchoire 37.

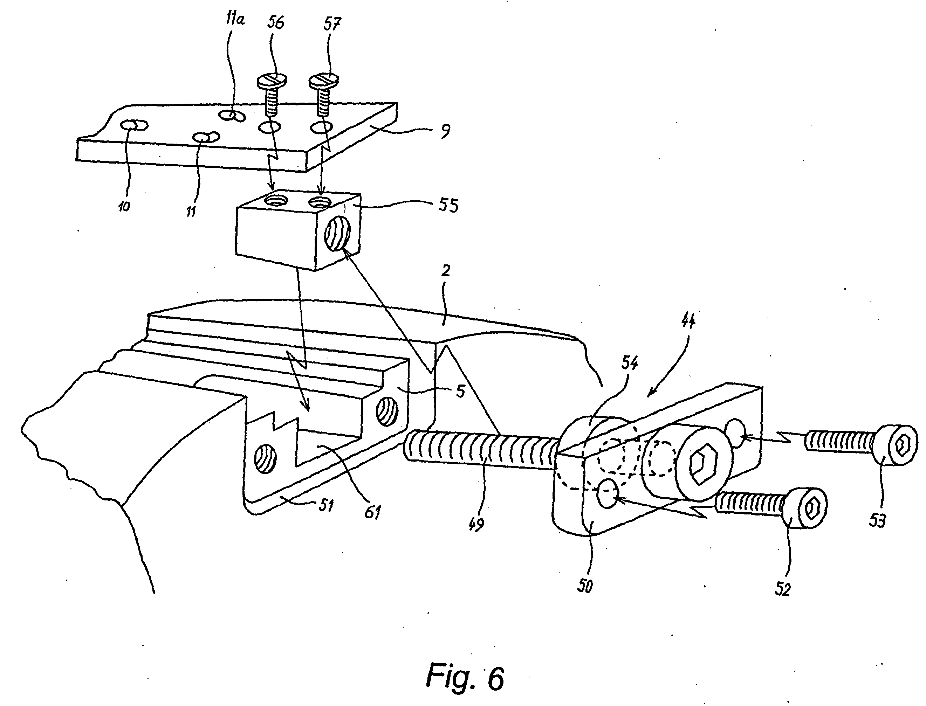

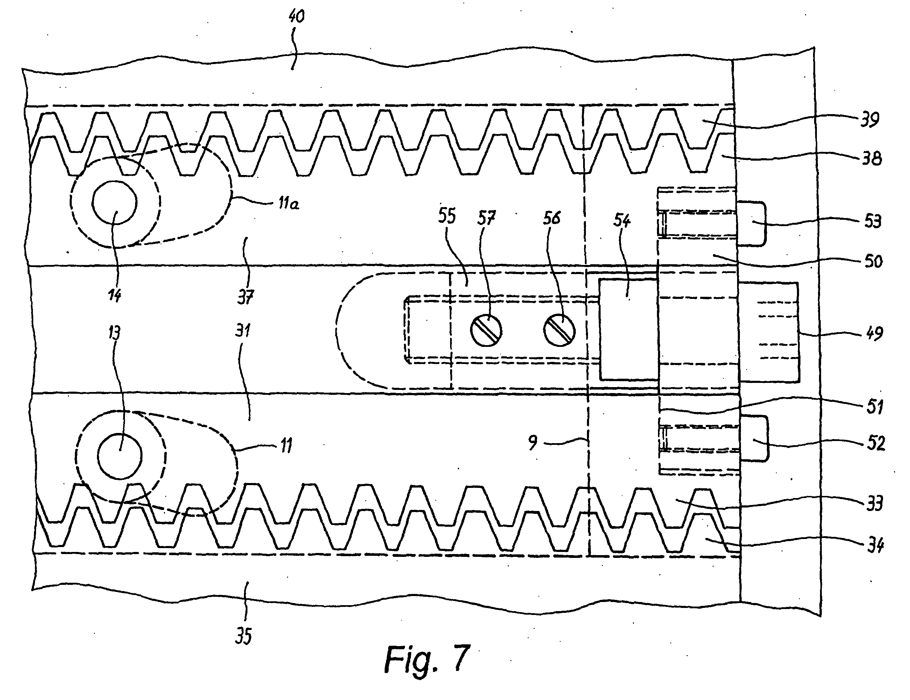

Le coulisseau déplaçable 9 comporte, à l'une de ses extrémités un dispositif de traction 44 qui sera décrit plus en détail à l'aide des figures 6 et 7. Lors de l'actionnement, du dispositif de traction 44, la mâchoire 32 va se déplacer en direction de la flèche 43 pour effectuer le serrage de l'extrémité 6 de la bande de revêtement 3. Ce déplacement de la mâchoire 32 est obtenu par le truchement de l'action des rainures en forme de cames linéaires 11a, aménagées dans le coulisseau déplaçable 5, sur les galets 13, solidaires de la mâchoire 32. Le mouvement du coulisseau déplaçable 9 aura également pour effet de déplacer simultanément la mâchoire 37, mais dans le sens indiqué par la flèche 45, cela par l'action des rainures en forme de cames linéaires 11 sur les galets 14. Les mâchoires 32 et 37, ainsi que le coulisseau déplaçable 9 sont guidées à l'aide des galets 12 s'engageant dans les rainures de guidage 10, 11. Les galets 12 sont fixés, de façon à pouvoir tourner, sur le corps de cylindre 2 au moyen des vis 46.

Cette solution faisant intervenir deux mâchoires 32 et 37 permet un desserrage et un serrage des extrémités 6 et 7 des bandes de revêtement 3 en diminuant l'ampleur du déplacement du coulisseau déplaçable 9 ainsi que des mâchoires 32 et 37. Il peut exister un nombre de dispositifs de blocage et de déblocage 8 quelconque dans la largeur, indépendant du nombre de bandes de revêtement 3 réparties sur la largeur du corps de cylindre 2.

La figure 5 est une vue en coupe partielle selon III-III de la figure 1 représentant le dispositif de blocage et de déblocage 8 à deux mâchoires en position de desserrage des bandes de revêtement, Dans cette figure, les signes de référence sont les mêmes que ceux utilisés en relation avec la description de la figure 4. Cependant, dans cette figure, l'actionnement, en sens inverse, du dispositif de traction 44 va provoquer le déplacement de la mâchoire 32 en direction de la flèche 47 pour effectuer le desserrage de l'extrémité 6 de la bande de revêtement 3. Le mouvement du coulisseau déplaçable 9 aura également pour effet de déplacer simultanément la mâchoire 37 pour effectuer le desserrage de l'extrémité 7 de la bande de revêtement 3, mais dans le sens indiqué par la flèche 48, cela par l'action des rainures en forme de cames linéaires 11 sur les galets 14. Le déplacement des mâchoires 32 et 37 sera choisi de façon à ce que les extrémités 6 et 7 de la bande de revêtement 3 puissent être dégagées des nez 32a et 37a de sorte que le démontage de cette bande de revêtement 3 s'effectue facilement et sans détérioration.

Cette solution faisant intervenir deux mâchoires 32 et 37 permet un serrage et un desserrage des extrémités 6 et 7 des bandes de revêtement 3 en diminuant l'ampleur du déplacement du coulisseau déplaçable 9 ainsi que des mâchoires 32 et 37. Il peut exister un nombre de dispositifs de blocage et de déblocage 8 quelconque dans la largeur, indépendant du nombre de bandes de revêtement 3 réparties sur la largeur du corps de cylindre 2.

La figure 6 est une vue éclatée, en coupe partielle, d'un dispositif de traction 44 agencé à l'une des extrémités du contre-cylindre de découpe rotative 1. Ce dispositif de traction 44 comporte une vis de déplacement 49 guidée dans une plaque-palier 50 fixée dans un logement 51 du contre-cylindre de découpe rotative 1 au moyen des vis 52 et 53. Cette vis de déplacement 49 est positionnée par rapport à la plaque-palier 50 à l'aide d'une bague d'arrêt 54. La vis de déplacement 49 s'engage dans un écrou 55 fixé à la partie inférieure du coulisseau déplaçable 9 par des vis 56 et 57. Ainsi, lors de l'actionnement en rotation, dans un sens ou dans l'autre, de la vis de déplacement 49 on obtiendra le serrage ou le desserrage des extrémités 6, 7 des bandes de revêtement 3. Il est clair que le dispositif de traction 44 pourrait être avantageusement remplacé par tout autre organe susceptible d'engendrer le mouvement du coulisseau déplaçable 9, par exemple un vérin pneumatique.

La figure 7 est une vue selon A de la figure 4 représentée sans bandes de revêtement 3. Dans cette figure, la désignation des différents composants reprend les mêmes chiffres de référence que ceux utilisés en relation avec la description des figures 4. 5 et 6.

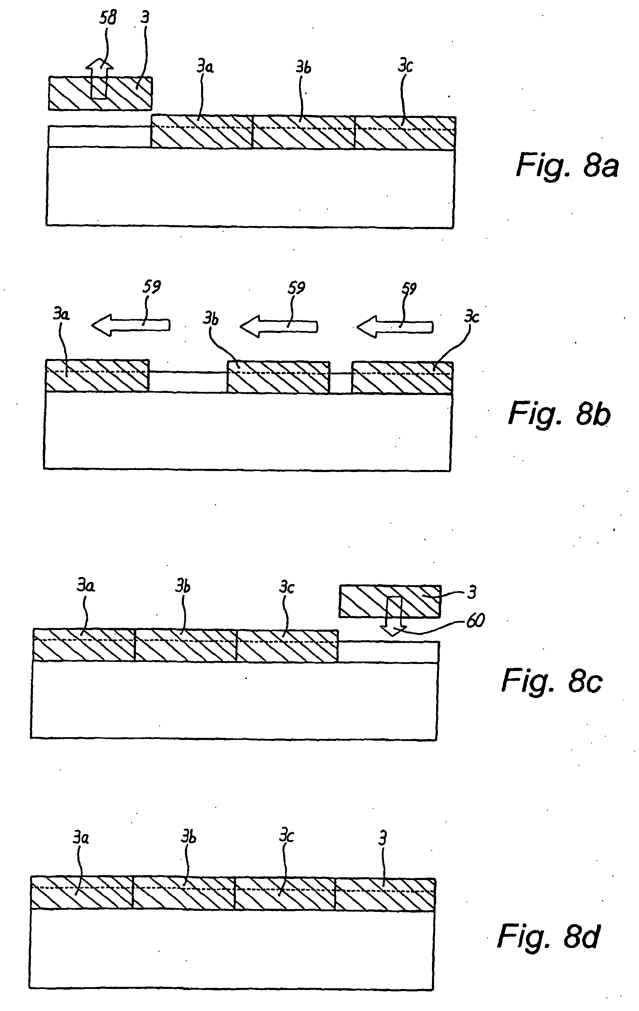

Les figures 8a à 8d représentent schématiquement les séquences de permutation des bandes de revêtement 3. Dans la représentation de la figure 8a, les mâchoires 32 et 37 sont en position desserrées (voir figure 5). Il est alors possible de retirer la bande de revêtement 3 comme le montre la flèche 58. Les bandes de revêtement 3a à 3c sont elles aussi dans une situation desserrée ce qui permet de les déplacer en direction des flèches 59 (voir figure 8b). Une fois le déplacement des bandes de revêtement 3a à 3c effectué, la bande de revêtement 3 pourra être remise en place, comme indiqué par la flèche 60, cela à la position qu'occupait précédemment la bande de revêtement 3c (voir figure 8c). Les bandes de revêtement 3 à 3c ayant été permuté, on agira sur le dispositif de déplacement 44 et les mâchoires 32 et 37 viendront en position de serrage comme cela est représenté sur la figure 4. Il est évident qu'en utilisant la solution donnée par la description qui précède un éventail important de permutation est offert à l'utilisateur qui peut choisir de permuter n'importe quelle bande de revêtement 3 à 3c en fonction de leur détérioration sans endommager les bandes de revêtement 3 à 3c. La forme identique symétrique des extrémités des bandes 3 permet en outre d'effectuer une rotation sur elles même, le bord avant devenant ensuite le bord arrière, pour mieux répartir l'usure.

## Revendications

1. Dispositif pour le montage et le démontage des bandes de revêtement (3 à 3c) d'un contre-cylindre de découpe rotative (1) comportant des moyens pour serrer et desserrer les extrémités (6, 7) d'au moins une bande de revêtement (3 à 3c) de façon à autoriser sa permutation dans la largeur d'un contre-cylindre de découpe rotative (1), lesdits moyens pour serrer et desserrer les extrémités (6, 7) d'au moins une bande de revêtement (3 à 3c) comprenant un coulisseau déplaçable (9) apte à s'étendre dans le sens de la largeur d'un contre-cylindre, les moyens pour serrer et desserrer les extrémités (6, 7) d'une bande de revêtement (3 à 3c) étant constitués par un organe de blocage et de déblocage (8), comprenant ledit coulisseau déplaçable (9), apte à être logé dans une rainure (5) agencée à la périphérie d'un corps de cylindre (2) d'un contre-cylindre de découpe rotative (1), **caractérisé en ce que** ledit coulisseau déplaçable (9) comporte des rainures de guidage (10) et des rainures (11, 11a) en forme de cames linéaires dans lesquelles s'engagent des galets (13, 14) solidaires d'au moins une mâchoire (16, 32, 37) déplaçable de façon à être apte à agir sur au moins une des extrémités des bandes de revêtement (3 à 3c).

2. Dispositif pour le montage et le démontage des bandes de revêtement (3 à 3c) d'un contre-cylindre de découpe rotative (1) selon la revendication 1, **caractérisé en ce que** le coulisseau déplaçable (9) est actionné au moyen d'un dispositif de traction (44) comprenant une vis de déplacement (49) s'engageant dans un écrou (55) fixé à la partie intérieure dudit coulisseau déplaçable(9).

3. Dispositif pour le montage et le démontage des bandes de revêtement (3 à 3c) d'un contre-cylindre de découpe rotative (1) selon la revendication 2, **caractérisé en ce que** le dispositif de traction (44) comprend un vérin pour actionner le coulisseau déplaçable (9).

4. Dispositif pour le montage et le démontage des bandes de revêtement (3 à 3c) d'un contre-cylindre de découpe rotative (1) selon la revendication 3, **caractérisé en ce que** le dispositif de traction (44) est agencé dans une rainure (61) aménagée à l'une des extrémités du corps de cylindre (2).

5. Dispositif pour le montage et le démontage des bandes de revêtement (3 à 3c) d'un contre-cylindre de découpe rotative (1) selon la revendication 1, **caractérisé par le fait que** les extrémités (6, 7) des bandes de revêtement (3 à 3c) sont de forme identique et en ce que la bande peut s'accrocher ainsi indifféremment dans un sens comme dans l'autre.

## Patentansprüche

1. Vorrichtung für die Montage und Demontage von Überzugbändern (3 bis 3c) eines Drehstanz-Gegenzylinders (1), umfassend Mittel zum Einspannen und Ausspannen der Enden (6, 7) wenigstens eines Überzugbandes (3 bis 3c), so dass seine Umbesetzung in der Breite eines Drehstanz-Gegenzylinders (1) ermöglicht ist, wobei die Mittel zum Einspannen und Ausspannen der Enden (6, 7) wenigstens eines Überzugbandes (3 bis 3c) einen verschiebbaren Schlitten (9) umfassen, der geeignet ist, sich in Breitenrichtung eines Gegenzylinders zu erstrecken, wobei die Mittel zum Einspannen und Ausspannen der Enden (6, 7) eines Überzugbandes (3 bis 3c) durch eine den verschiebbaren Schlitten (9) umfassende Blockier- und Freigabeeinrichtung (8) gebildet sind, die dazu geeignet ist, in einer am Rand eines Zylinderkörpers (2) eines Drehstanz-Gegenzylinders (1) ausgebildeten Nut (5) angeordnet zu sein, **dadurch gekennzeichnet, dass** der verschiebbare Schlitten (9) Führungsnuten (10) und Nuten (11, 11a) in Form von linearen Nocken umfasst, in welche Rollkörper (13, 14) eingreifen, die einstückig mit wenigstens einer Klemme (16, 32, 37) sind, welche derart verschiebbar ist, dass sie dazu geeignet ist, auf wenigstens eines der Enden der Überzugbänder (3 bis 3c) zu wirken.

2. Vorrichtung für die Montage und Demontage von Überzugbändern (3 bis 3c) eines Drehstanz-Gegenzylinders (1) gemäss Patentanspruch 1, **dadurch gekennzeichnet, dass** der verschiebbare Schlitten (9) mittels einer Antriebsvorrichtung (44) betätigt ist, welche eine Stellschraube (49) umfasst, die in eine am unteren Abschnitt des verschiebbaren Schlittens (9) befestigte Mutter (55) eingreift.

3. Vorrichtung für die Montage und Demontage von Überzugbändern (3 bis 3c) eines Drehstanz-Gegenzylinders (1) gemäss Patentanspruch 2, **dadurch gekennzeichnet, dass** die Antriebsvorrichtung (44) ein Stellglied umfasst, um den verschiebbaren Schlitten (9) zu betätigen.

4. Vorrichtung für die Montage und Demontage von Überzugbändern (3 bis 3c) eines Drehstanz-Gegenzylinders (1) gemäss Patentanspruch 3, **dadurch gekennzeichnet, dass** die Antriebsvorrichtung (44) in einer Nut (61) eingerichtet ist, die an einem der Enden des Zylinderkörpers (2) angeordnet ist.

5. Vorrichtung für die Montage und Demontage von Überzugbändern (3 bis 3c) eines Drehstanz-Gegenzylinders (1) gemäss Patentanspruch 1, **dadurch gekennzeichnet, dass** die Enden (6, 7) der Überzugbänder (3 bis 3c) eine identische Form aufweisen und dass das Band somit gleichermassen in einer oder der anderen Richtung eingehängt werden kann.

## Claims

1. Device for mounting and removing coating tapes (3 to 3c) of a rotary diecutting anvil roller (1), comprising means for tightening and loosening the ends (6, 7) of at least one coating tape (3 to 3c) so as to authorize its permutation in the width of a rotary diecutting anvil roller (1), the said means for tightening and loosening the ends (6, 7) of at least one coating tape (3 to 3c) comprising a removable slide (9) extendable in the direction of the width of an anvil roller, the means for tightening and loosening the ends (6, 7) of a coating tape (3 to 3c) consisting of a blocking and releasing element (8), comprising the said removable slide (9), able to be placed in a groove (5) arranged in the periphery of a cylinder body (2) of a rotary diecutting anvil roller (1), **characterized in that** the said removable slide (9) comprises guiding grooves (10) and grooves (11, 11a) in the shape of linear cams into which fit rollers (13, 14) fixedly attached to a least one jaw (16, 32, 37) which is removable so as to be able to act on at least one end of the coating tapes (3 to 3c).

2. Device for mounting and removing coating tapes (3 to 3c) of a rotary diecutting anvil roller (1) according to claim 1, **characterized in that** the removable slide (9) is actuated by means of a traction device (44) comprising an adjusting screw (49) fitting into a nut (55) attached to the lower part of said removable slide (9).

3. Device for mounting and removing coating tapes (3 to 3c) of a rotary diecutting anvil roller (1) according to claim 2, **characterized in that** the traction device (44) comprises a cylinder to actuate the removable slide (9).

4. Device for mounting and removing coating tapes (3 to 3c) of a rotary diecutting anvil roller (1) according to claim 3, **characterized in that** the traction device (44) is arranged in a groove (61) arranged at one end of the cylinder body (2).

5. Device for mounting and removing coating tapes (3 to 3c) of a rotary diecutting anvil roller (1) according to claim 1, **characterized in that** the ends (6, 7) of the coating tapes (3 to 3c) are of identical shape and **in that** the tape can thus hang as indifferently in one direction as in the other.
